Europäisches Patentamt

European Patent Office

Office européen des brevets

(19)

(11) Numéro de publication: **0 270 397**
**A1**

(12) ## DEMANDE DE BREVET EUROPEEN

(21) Numéro de dépôt: **87402372.4**

(22) Date de dépôt: **22.10.87**

(51) Int. Cl.⁴: **B 60 V 1/00**

(30) Priorité: **05.11.86 FR 8615405**

(43) Date de publication de la demande:
**08.06.88 Bulletin 88/23**

(84) Etats contractants désignés:
**BE CH DE ES GB GR IT LI NL SE**

(71) Demandeur: **SEAGLIDER CONCEPT S.A.**
**55, Avenue de Buzenval**
**F-92500 Rueil-Malmaison (FR)**

(72) Inventeur: **Morash, Daniel**
**7, Avenue La Bruyère**
**F-78160 Marly Le Roi (FR)**

(74) Mandataire: **Morash, Daniel**
**17, Avenue La Bruyère**
**F-78160 Marly-le-Roi (FR)**

(54) **Engin de transport à effet de surface comportant des moyens de sustentation perfectionnes.**

(57) Engin de transport à effet de surface comportant une structure sustentée (2) par coussin d'air sous pression engendré à partir d'une soufflante et des moyens de propulsion (3), lesdits moyens de propulsion étant indépendants des moyens assurant la sustentation, ainsi qu'au moins un dispositif escamotable (4) à roues (ou à moyens équivalents) pour le déplacement sur terre ou en eau peu profonde, qui est rendu opératoire lorsque le moyen de propulsion (3) est escamoté dans sa condition non-opératoire et vice-versa. Le dispositif (4) pour le déplacement sur terre, en eau peu profonde ou sur des terrains de type marécageux comprend au moins deux hélices latérales carénées (4a) opératoires lorsque le moyen (3) de propulsion sur l'eau est escamoté dans sa condition non-opératoire. La structure sustentée comprend des moyens qui commandent simultanément la sustentation proprement dite, l'assiette de l'engin ainsi que sa stabilité lors du franchissement d'un obstacle ou lors d'une perturbation dynamique, lesdits moyens assurant aussi une identité de réponse de l'engin aux diverses sollicitations quelle que soit la charge de celui-ci.

FIG.18

EP 0 270 397 A1

Bundesdruckerei Berlin

**Description**

## ENGIN DE TRANSPORT A EFFET DE SURFACE COMPORTANT DES MOYENS DE SUSTENTATION PERFECTIONNES.

La présente invention se rapporte à un engin de transport comportant une structure sustentée par des coussins de fluide sous pression, dit engin à effet de surface. Cet engin peut être adapté pour se déplacer sur l'eau et/ou sur terre.

La présente invention concerne plus précisément les engins à effet de surface comportant une structure sustentée, à la périphérie de laquelle est disposée une jupe faite d'un matériau souple et flexible, qui délimite un coussin de sustentation alimenté par des moyens générateurs d'air sous pression.

Dans les navires connus de ce type, la sustentation est créée par une turbine ou une hélice aérienne alimentant, par un conduit, directement le coussin de sustentation, délimité par des jupes accrochées directement à la structure.

De tels systèmes nécessitent une hauteur de fuite importante pour assurer la stabilité dynamique du coussin de sustentation par effet de laminage d'air, la hauteur de fuite étant la distance, en fonctionnement de l'engin, entre la surface du milieu (terre, eau) sur laquelle il se déplace et la bordure inférieure de la jupe.

Plus la hauteur de fuite est importante, plus on doit fournir de fluide (air) pour créer le coussin, et, par conséquent, plus on dépense de l'énergie. On cherche donc à ce que la hauteur de fuite soit la plus faible possible, pour cette raison et, également, pour augmenter la stabilité statique de l'engin. En effet, si celui-ci se trouve déstabilisé, alors qu'il est en marche, par suite de la présence d'un obstacle quelconque (vague par exemple), il doit pouvoir retrouver très rapidement une position stable par viscosité, c'est-à-dire par laminage de l'air à la sortie de la jupe, afin d'éviter les vibrations. Cette exigence impose une hauteur de fuite relativement conséquente.

A cet inconvénient, s'ajoute le fait que la stabilité dynamique des engins précités reste relativement faible et que l'on est obligé de prévoir des systèmes de ballast qui compensent le déplacement du centre de gravité afin de replacer celui-ci au centre de poussée. De tels systèmes de ballast consistent en des réservoirs d'eau situés à l'avant et à l'arrière de l'engin, ces réservoirs communiquant entre eux. Toutefois, le délai de transfert du liquide d'un réservoir à l'autre n'est pas immédiat, si bien que l'on ne rétablit pas rapidement la position d'équilibre. Cette condition nécessite des puissances de sustentation importantes pour obtenir des vitesses élevées de transport.

Une autre conséquence du manque de stabilité dynamique et statique, c'est-à-dire de couples de rappel élevés redressant rapidement l'engin soumis à une perturbation, l'utilisation des propulsions classiques aquatiques (hélices marines) et terrestres (roues) est rendue difficile, car ces propulsions engendrent des couples à cabrer ou à piquer importants. En effet, les engins connus utilisent une propulsion aérienne dont la poussée est proche du centre de gravité. Or, les propulsions aériennes ne sont pas adaptées aux faibles vitesses, car elles sont consommatrices d'énergie aux basses vitesses. On ajoutera l'inconvénient d'un mauvais confort pour les passagers dans la mesure où l'amortissement dans le plan vertical est corrélé à la hauteur de fuite et n'est seulement corrélé qu'à cette dernière.

Par ailleurs, le montage direct des jupes sur la structure entraîne des traînées parasites par effet d'écopage ; en effet, la jupe ne s'efface pas facilement à la vague et la "décapite", d'où il résulte la traînée évoquée ci-dessus, ce qui entraîne une consommation d'énergie accrue, pour des vitesses élevées.

La présente invention permet de remédier à ces inconvénients. A cet effet, conformément à l'invention, on prévoit une jupe dont on peut régler la position qui contrôle la sustentation et l'assiette, et qui permet d'obtenir des gains statiques de stabilité très importants, et, en conséquence, de faire fonctionner l'engin avec une hauteur de fuite faible, même lorsqu'on se trouve en présence d'obstacles ; on peut ainsi diminuer la consommation d'énergie et se dispenser de transporter des ballasts, du fait que la position d'équilibre peut être rétablie de manière quasi-automatique.

Un engin de transport à effet de surface selon l'invention, comportant une structure sustentée par coussin d'air sous pression engendré à partir d'une soufflante et des moyens de propulsion est caractérisé en ce que lesdits moyens de propulsion sont indépendants des moyens assurant la sustentation et comportent :

. au moins un dispositif escamotable à hélice propre à être rendu opératoire lors d'un déplacement sur l'eau et non-opératoire lors d'un déplacement sur terre ; et

. au moins un dispositif escamotable à roues (ou à moyens équivalents) pour le déplacement sur terre ou en eau peu profonde, qui est rendu opératoire lorsque le dispositif à hélice est escamoté dans sa condition non-opératoire, et vice-versa.

Pour le déplacement sur terre, en eau peu profonde ou sur des terrains du type marécageux, on prévoit au moins deux hélices latérales carénées associées au dispositif escamotable à roues et qui sont opératoires lorsque le dispositif d'hélice de propulsion sur l'eau est escamoté dans sa condition non-opératoire.

La structure sustentée comprend des moyens qui commandent simultanément la sustentation proprement dite, l'assiette de l'engin ainsi que sa stabilité lors du franchissement d'un obstacle ou lors d'une perturbation dynamique, lesdits moyens assurant aussi une identité de réponse de l'engin aux diverses sollicitations quelle que soit la charge de celui-ci.

La structure sustentée est divisée en au moins deux chambres où règnent des pressions statiques de sustentation asservies l'une à l'autre par lesdits moyens de commande et/ou contrôle et elle est, avantageusement, divisée en au moins quatre chambres limitées à leur périphérie externe par une jupe souple et de forme modifiable et intérieurement par une cloison longitudinale sensiblement médiane ainsi qu'une cloison transversale, sensiblement orthogonale à la cloison longitudinale, lesdites cloisons longitudinale et transversale étant elles aussi de forme modifiable et communiquant avec l'espace périphérique du coussin d'air limité par la jupe par l'intermédiaire d'au moins un orifice.

La jupe périphérique comporte au moins deux parties dont la première est fixée, d'une part, à la structure sustentée et, d'autre part, à au moins un arceau ayant en plan sensiblement la forme du plat-bord de l'engin, la seconde partie de la jupe étant fixée à sa partie supérieure audit arceau et s'étendant à partir dudit arceau jusqu'au voisinage de la surface sur laquelle se déplace l'engin.

Dans une réalisation avantageuse, l'arceau est relié à la structure sustentée par une charpente déformable articulée.

Pour faciliter l'entretien de l'engin la seconde partie de la jupe périphérique comprend une section adjacente à l'arceau, percée d'une pluralité d'ouvertures et au moins deux autres sections dont la première est d'un seul tenant avec celle à perforations et dont la seconde, - qui forme bande d'usure -, est fixée à la première par des boulons ou analogues.

Selon une autre caractéristique essentielle de l'invention, la modification de forme de la jupe périphérique et des cloisons est commandée par des moyens de "muscles" pneumatiques.

Pour l'obtention de cette modification de forme de la jupe périphérique et des cloisons, commandée à partir des muscles, on prévoit des systèmes de toiles disposés perpendiculairement à ladite jupe et/ou aux parois limitant lesdites cloisons longitudinale et transversale, la liaison d'un système de toiles au muscle qui lui est associé étant effectuée à l'aide d'un tirant comme une bande ou analogue.

Cette dernière est avantageusement repliée sur elle-même le long de sa ligne longitudinale médiane et présente des bords transversaux comportant chacun une rangée de trous pour le passage d'organes de fixation, comme des boulons ou analogues, au système de toiles d'une part et au muscle qui lui est associé, d'autre part.

Le système de toiles associé à la jupe périphérique comprend des toiles triangulaires, après pliage, et des toiles à contour de quadrilatère réunies entre elles de manière telle que ladite jupe périphérique est constamment en condition tendue lors du fonctionnement de l'engin.

Dans une réalisation préférée les systèmes de toiles associés à la bande d'usure de la jupe périphérique sont renforcés par une seconde toile à laquelle est associée une seconde bande d'usure disposée en regard de la première bande d'usure et à distance de celle-ci, avec interposition, entre les deux dites bandes d'usure, d'une bande à perforations centrales.

A la bande d'usure sont associés sur la face externe de celle-ci un rabat et un volet déflecteurs d'embruns et/ou de poussières rencontrés lors du déplacement de l'engin sur l'eau ou sur terre.

Dans une réalisation particulièrement préférée les muscles comprennent chacun deux bandes souples superposées enfermant en leur intérieur des organes du type soupape, les bordures le long desquelles sont réunies les deux dites bandes ménageant des moyens de liaison aux systèmes de toiles, d'une part, et à la structure sustentée, d'autre part.

Les organes du type soupape sont ménagés par des dispositifs à bandes percés d'orifices de passage d'air et, dans une telle réalisation, les muscles inférieurs associés à la jupe périphérique et les muscles associés aux cloisons longitudinale et transversale comportent, en outre, des volets longitudinaux de guidage de l'air susceptible de s'échapper par des perforations disposées suivant des rangées latérales aux deux extrémités longitudinales desdits muscles et suivant une rangée centrale de trous ménagés dans une des parois desdits muscles.

Pour l'alimentation des muscles de commande de la jupe périphérique à partie de la soufflante l'invention prévoit une canalisation et, pour l'alimentation générale du coussin d'air de sustentation, un boudin périphérique externe coopérant avec la première partie perforée de la jupe et des boudins intérieurs associés au boudin périphérique externe par des bandes latérales à perforations centrales.

Les boudins intérieurs sont en communication, à leur extrémité, avec l'espace intérieur des cloisons longitudinale et transversale auxquelles ils sont adjacents par l'intermédiaire d'une canalisation à clapet et les muscles de manoeuvre des cloisons longitudinale et/ou transversale sont commandés à partir de la pression régnant dans lesdites cloisons auxquelles ils sont reliés par des canaux.

Pour réguler la pression d'air issu de la soufflante dans la canalisation de distribution, un boudin est disposé à proximité de la zone d'entrée de ladite canalisation dans la chambre avant et/ou arrière de l'engin, ledit boudin étant en communication avec le muscle supérieur disposé dans ladite chambre avant et/ou arrière par l'intermédiaire d'une tubulure, le boudin étant en outre maintenu au contact de la canalisation par des bandes à perforations.

Pour la stabilisation à hauteur de vol de l'engin, en réponse à une variation de la position du centre de gravité ou de la charge entraînant une variation de la pression statique dans les chambres de sustentation, on prévoit de régler la pression interne des muscles inférieurs et des muscles supérieurs par les trous de fuite des parois desdits muscles.

En vol stationnaire, le débit de fuite est sensiblement le même dans les chambres de sustentation avant et arrière, les pressions statiques dans lesdites chambres étant régulées à partir des boudins intérieurs munis de clapets d'une part et, d'autre part, par les boudins périphériques externes à trous de fuite associés aux chambres avant et arrière.

Par ailleurs, le dispositif de la présente invention permet de proposer une jupe pour navire à effet de surface, qui ne "décapite" pas la vague, comme c'est le cas pour les engins connus, pour lesquels les jupes font, en cas d'obstacles rencontrés par le navire, opposition à l'avancement de ce dernier. Au contraire, dans la présente invention, la jupe suit, en toutes circonstances, le terrain, indépendamment des obstacles que l'engin peut rencontrer.

Une conséquence est que le matériau constituant la jupe aura beaucoup moins de chance de s'user et de s'endommager, par comparaison avec les jupes des engins connus de ce type.

Enfin, avec l'engin selon l'invention, le système d'amortissement est constitué par la jupe dont on vient d'indiquer les caractéristiques essentielles, si bien que le fait que la hauteur de fuite soit faible n'intervient pas pour l'amortissement. De plus l'amortissement obtenu selon l'invention est meilleur, l'absorption de l'énergie cinétique se faisant mieux, car sur une plus grande hauteur, du fait de l'intervention de la jupe.

En effet, lors du franchissement d'un obstacle provoquant une chute du différentiel de pression entre celle régnant dans les muscles et celle régnant dans les chambres de sustentation, un allongement desdits muscles entraîne un mouvement de relevé de la jupe qui augmente la hauteur d'amortissement laquelle est multipliée par un facteur de l'ordre de 10 à 20.

Pour mieux faire comprendre l'objet de la présente invention, on décrira plus en détail ci-après, à titre indicatif et non limitatif, un mode de réalisation d'un engin à effet de surface selon l'invention, représenté sur le dessin annexé.

Sur ce dessin :

- la figure 1 est une vue schématique partielle de dessous, de l'engin dont la direction d'avancement est symbolisée par la flèche F sur cette figure ;

- les figures 2, 3 et 4 sont des vues en coupe selon les lignes respectivement II-II, III-III et IV-IV de la figures 1, les lignes II-II et III-III étant des lignes brisées ;

- la figure 5 est une vue de dessous de l'engin sans la jupe et les cloisons, la figure 5A représentant à plus grande échelle, le détail D de la figure 5, et la figure 5B étant une vue schématique latérale du système représenté sur la figure 5A ;

- la figure 6 est une vue, à plus grande échelle, de la partie située dans la zone d'extrémité gauche de la figure 4, montrant différents détails supplémentaires de montage.

- la figure 7 est une vue en perspective du système de liaison de la jupe avec un premier muscle associé, lui-même relié à la structure de l'engin ;

- la figure 7A est une vue éclatée des différents éléments qui permettent de réaliser l'assemblage de la figure 7 ;

- la figure 8 est une vue en perspective d'une partie inférieure de jupe et les figures 8A et 8B sont deux vues de détail de la figure 8 ;

- la figure 9 représente une coupe schématique de la région inférieure de la jupe montrant le dispositif extérieur à celle-ci qui est destiné à rabattre les embruns et poussières (soulevés respectivement sur mer et sur terre) ;

- la figure 10 est une vue en coupe transversale de la cloison longitudinale du dispositif de sustentation de l'engin, selon la ligne X-X de la figure 1 et à plus grande échelle, certaines parties ayant été ôtées dans un but de clarté ;

- la figure 11 est une vue en coupe, à plus grande échelle, du muscle associé à la cloison représentée sur la figure 10 ;

- la figure 12 est une vue en coupe transversale d'un muscle associé à la jupe, la figure 12A montrant le détail d'un clapet porté par ce muscle, et la figure 12B étant une vue en perspective d'une portion de ce muscle montrant le montage du clapet ;

- les figures 13 à 17 et 17A sont des vues schématiques destinées à illustrer l'explication du fonctionnement de l'engin selon la présente invention ; et

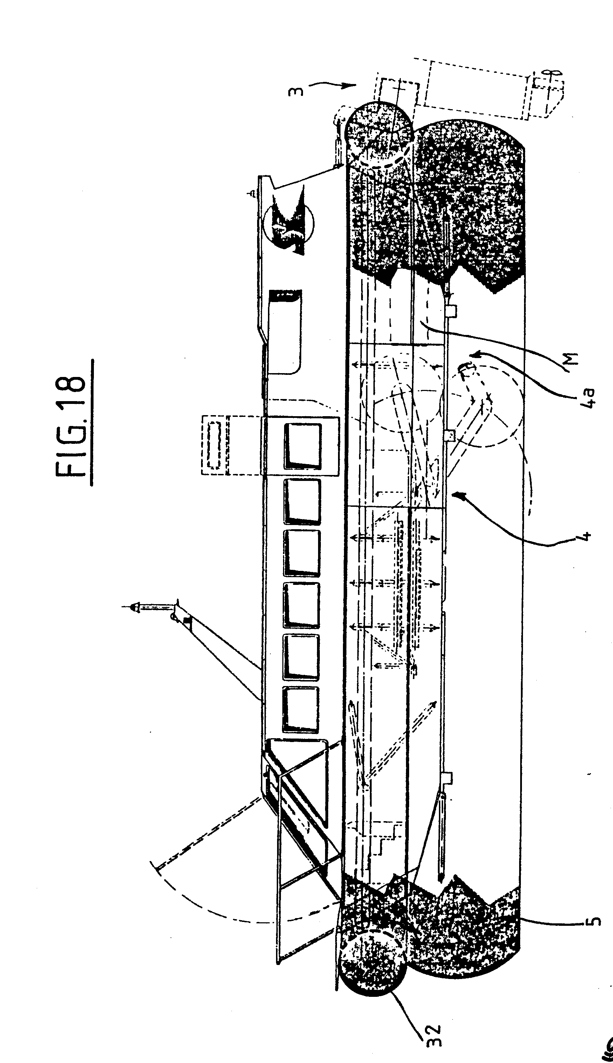

- la figure 18 est une vue schématique en élévation, d'un engin selon l'invention.

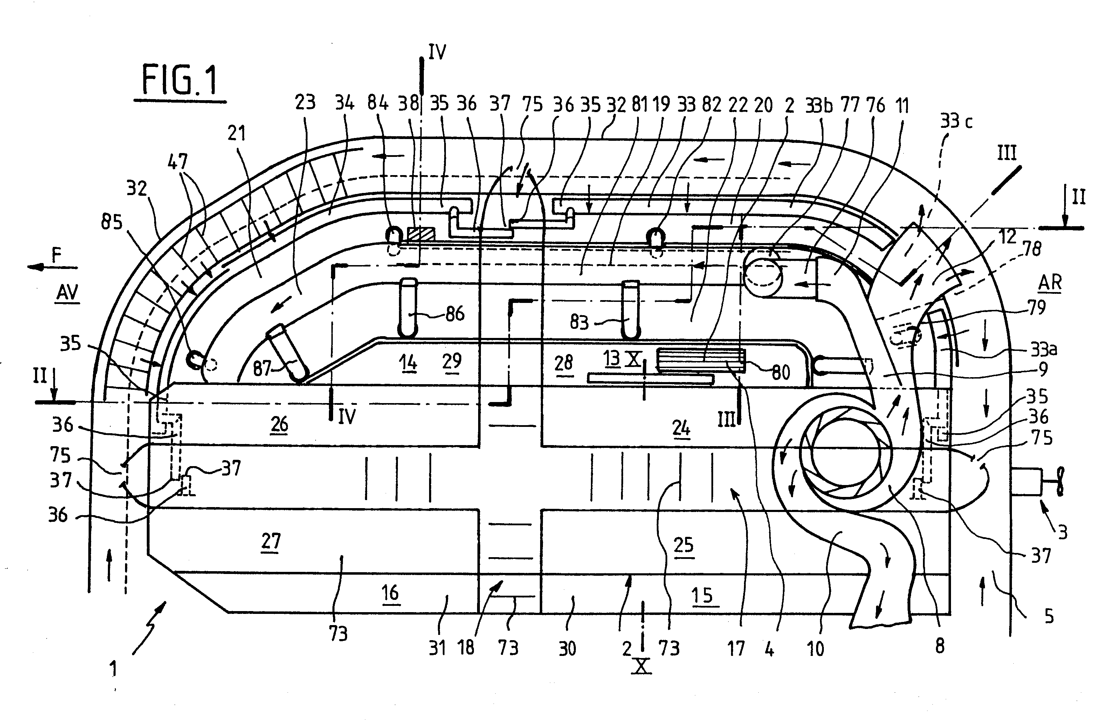

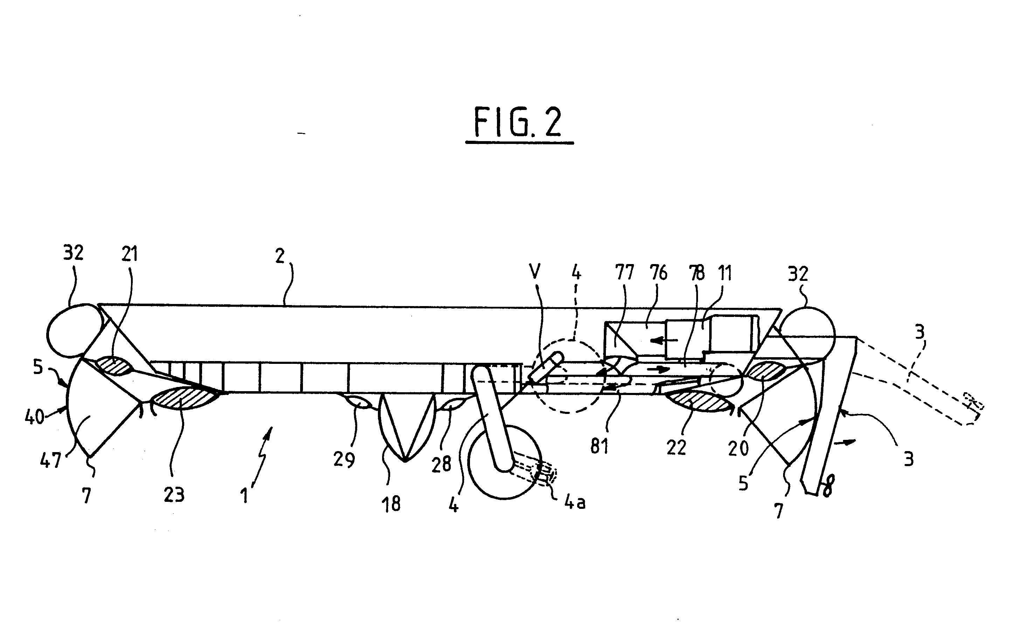

Si l'on se réfère maintenant aux figures 1 à 4, on voit que l'on a désigné par 1, dans son ensemble, un engin à effet de surface pouvant se déplacer aussi bien sur mer que sur terre ou encore en eau peu profonde ou sur des terrains du type marécageux. L'engin 1 comprend une structure sustentée 2, un dispositif 3 pour la propulsion maritime, disposé à l'arrière de l'engin, un dispositif 4 pour la propulsion terrestre, et un dispositif pour assurer la sustentation par coussin d'air sous pression. Quand le dispositif 3 est en service, le dispositif 4 est en position rentrée, et inversement. Toutefois, quand on est sur le point de sortir de l'eau ou de rentrer dans l'eau, les deux dispositifs 3 et 4 sont tous les deux en position basse. Lors d'une navigation en eau peu profonde, le dispositif 3 est relevé et la propulsion s'effectue au moyen d'au moins deux hélices ou turbines 4a carénées faisant partie intégrale du dispositif 4. Des moyens de vérin, montrés schématiquement V sur la figure 2, du type hydraulique ou pneumatique, assurent la mise en place et l'escamotage des dispositifs 3 et 4 de propulsion.

Le dispositif de sustentation est constitué par une jupe périphérique 5, réalisée en une matière souple et flexible, dont la bordure supérieure 6 est fixée à la structure 2 et dont la bordure inférieure 7 est libre, les moyens utilisés pour la mise en forme de cette jupe 5 étant décrits plus loin.

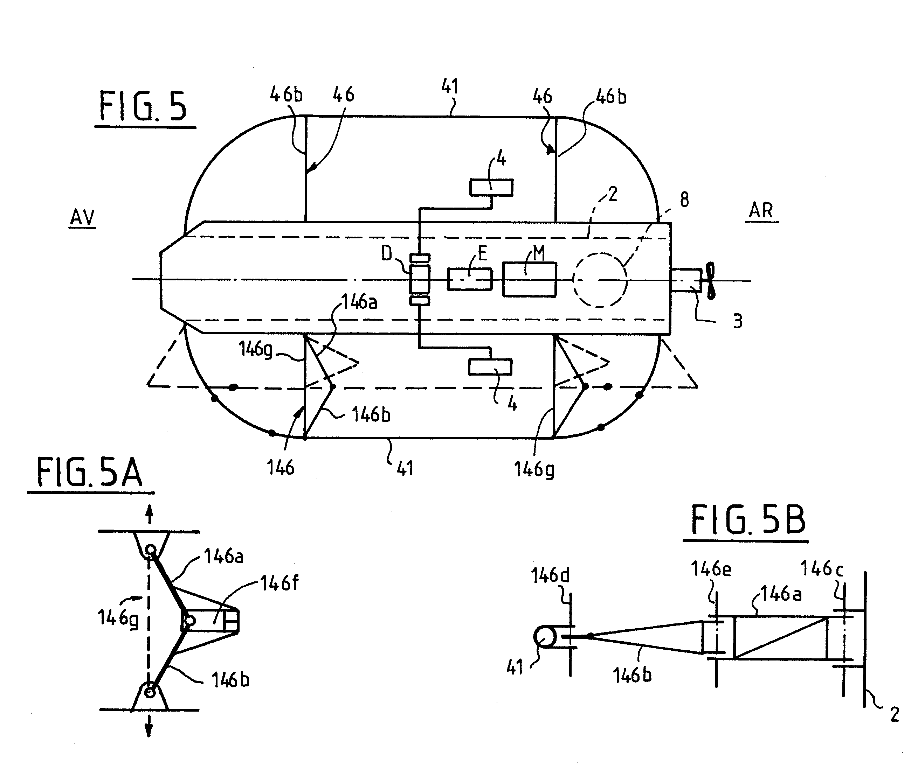

La jupe 5 délimite un coussin d'air de sustentation alimenté par une soufflante 8, à axe vertical, disposée à la partie centrale arrière de la structure 2 et propre à être entraînée par un ou des moteur(s) M montré(s) schématiquement sur la figure 5. Cette soufflante 8 comporte deux sorties opposées identiques 9 et 10, la sortie 10 ne se trouvant que partiellement représentée sur la figure 1.

Comme on peut le voir sur cette figure, la sortie 9 se divise en deux branches 11 et 12, la première (11) bifurquant vers l'intérieur, et la seconde (12) vers l'extérieur. La sortie 10 se divise de la même façon en deux branches, étant destinée à alimenter en air comprimé l'autre moitié longitudinale du coussin d'air.

L'espace délimité par la jupe 5 est divisé en quatre chambres 13, 14, 15 et 16 par une cloison longitudinale 17 sensiblement médiane et par une cloison transversale 18, qui le cas échéant, est légèrement décalée vers l'avant par rapport à la ligne transversale médiane de l'engin 1, sans que cette disposition soit cependant obligatoire. La distribution de l'air comprimé dans chacune des chambres précitées s'effectue par une canalisation 19 raccordée à la branche de sortie 11 de la soufflante 8 pour les chambres 13 et 14, étant entendu que les chambres 15 et 16 sont alimentées de la même façon par une canalisation disposée de façon symétrique par rapport à la canalisation 19.

Etant donné que la structure des moyens de sustentation est la même dans les parties longitudinales droite et gauche de l'engin, on ne décrira maintenant, pour des raisons de commodité, que celle de la partie droite, représentée sur la figure 1.

La canalisation 19 dont la direction suit le contour de la jupe 5, alimente, par différents branchements qui seront décrits plus en détail plus loin, d'une part, des muscles 20 et 21 -associés aux chambres respectivement 13 et 14- et, d'autre part, des muscles 22 et 23, -associés aux chambres respectivement 13 et 14-, décalés vers le bas et vers l'intérieur par rapport auxdits muscles 20 et 21. Dans chaque chambre, tous les muscles sont également disposés de manière à suivre le contour de la jupe 5.

Ces muscles 20 à 23 constituent les organes qui commandent le fonctionnement de la jupe 5, autrement dit les variations de sa forme qui peuvent se produire alors que l'engin 1 est en marche. Le choix du terme "muscle" pour désigner ces organes a été guidé par la forme de ceux-ci - on peut observer leur profil en fuseau sur les vues en coupe des figures 2 à 4 - et également par leur mode de fonctionnement, qui est analogue à celui des muscles du corps, comme cela sera décrit ci-après.

De la même façon qu'à la jupe 5, sont associés des muscles 20 à 23, à la cloison longitudinale 17, sont associés des muscles 24, 25, 26, 27, parallèles à ladite cloison 17, les muscles 24 et 26 étant disposés dans les chambres respectivement 13 et 14, et les muscles 25 et 27 étant disposés dans les chambres respectivement 15 et 16. Egalement, à la cloison transversale 18, sont associés des muscles 28, 29, 30, 31 parallèles à ladite cloison 18, les muscles 28 et 29 étant disposés dans les chambres respectivement 13 et 14, et les muscles 30 et 31, dans les chambres respectivement 15 et 16. Les muscles 24 à 31 sont destinés à commander la position des cloisons 17 et 18 ; ils sont alimentés par de l'air comprimé provenant des cloisons 17 et 18, elles-mêmes alimentées par l'air comprimé provenant d'un boudin périphérique 32, associé à la jupe 5, de la manière qui sera décrite plus loin.

Le dispositif comporte également des boudins intérieurs disposés tangentiellement au boudin 32, à savoir, d'une part, un boudin 33, disposé dans la chambre arrière 13 et composé de deux segments 33a et 33b, l'un disposé contre la partie arrière du boudin 32, et l'autre contre la partie latérale de ce dernier, les segments 33a et 33b étant reliés par un segment intermédiaire 33c disposé à l'arrière de la branche 12, lorsque l'on regarde la figure 1, et, d'autre part, un boudin 34, disposé dans la chambre avant 14. L'extrémité 35 de chacun des boudins 33 et 34 qui est voisine d'une cloison, soit 17, soit 18, suivant le cas, communique avec l'espace intérieur de la cloison correspondante par une canalisation coudée 36 munie, à son extrémité, d'un clapet 37.

Par ailleurs, dans la partie avant de l'engin 1, est disposé, à proximité de la zone d'entrée de la canalisation 19 dans la chambre 14, un boudin 38, de courte longueur, dont la structure et le fonctionnement sont indiqués plus loin.

Ayant maintenant décrit la disposition d'ensemble des organes permettant de commander la sustentation de l'engin 1 selon l'invention, on décrira plus en détail les particularités de ces organes :

- LA JUPE PERIPHERIQUE 5 :

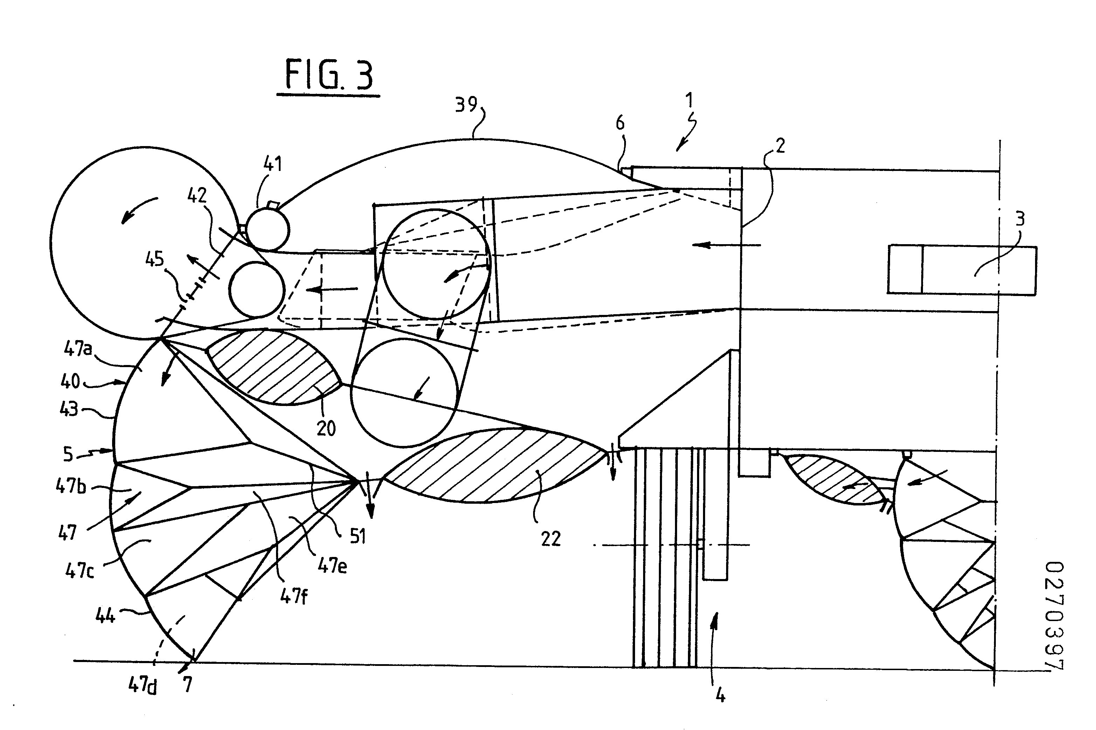

On décrira plus en détail la jupe en référence notamment aux figures 3, 4, 5, 6, 7A, 8,8A et 8B .

La jupe 5 comporte deux parties, à savoir, une partie supérieure 39 et une partie inférieure 40 (voir figures 2, 3, 4 et 6 ) . La partie 39 est reliée, d'une part, à la structure 2, en 6, par exemple, par boulonnage, et, d'autre part, à un arceau 41, que l'on peut voir sur la figure 5 et qui présente la forme d'une tige allongée recourbée à chacune de ses deux extrémités . L'engin 1 comporte deux arceaux 41 disposés de façon symétrique par rapport à la ligne longitudinale moyenne de l'engin 1 (figure 5 ) . Quant à la partie 40, elle se décompose en trois sections successives 42, 43 et 44, la première (42), qui comporte une pluralité d'ouvertures 45 (ou qui est poreuse), étant raccordée à l'arceau 41, et la deuxième (43) étant rattachée à la précédente et à la troisième (44), laquelle constitue une bande d'usure, comme on le décrira ci-après .

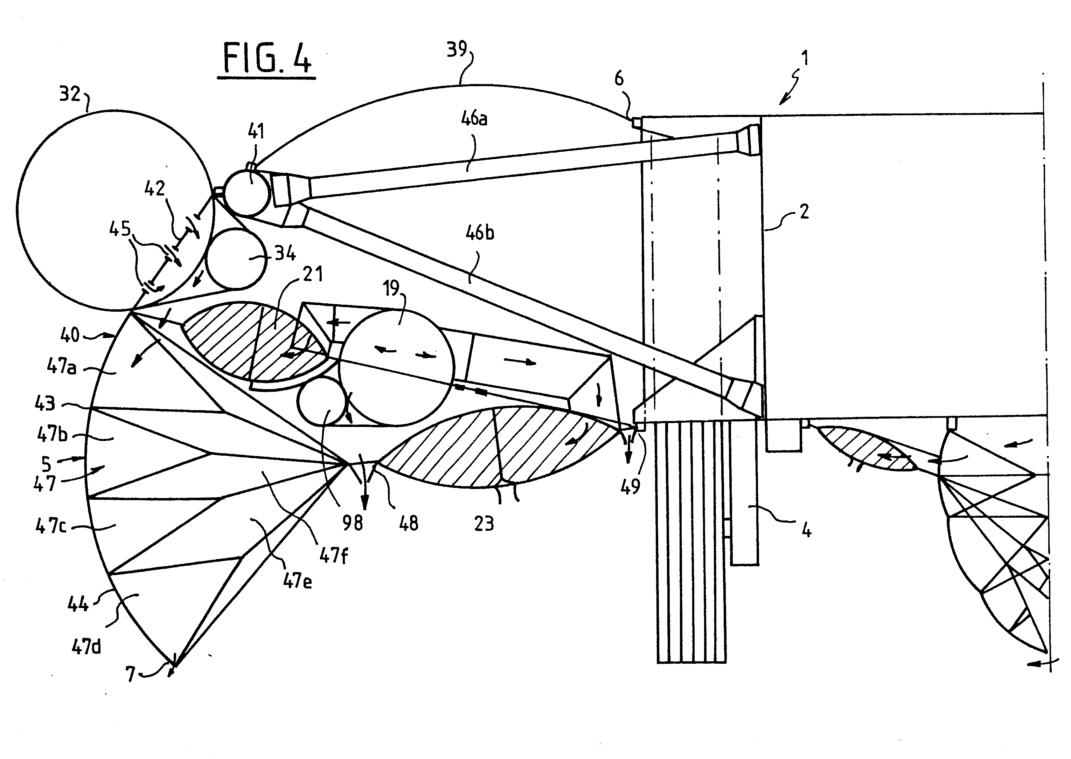

Chaque arceau 41 est tenu par une charpente constituée, dans un premier mode de réalisation possible (voir, sur la figure 5, moitié droite de l'engin 1 si l'on se place dans le sens de l'avancement de l'engin 1 ), de deux systèmes 46 constitués chacun par une paire de tubes 46a, 46b (figure 4 ) . Les deux tubes 46a, 46b sont, à une extrémité, boulonnés sur l'arceau associé 41, et attachés, à l'extrémité opposée, l'un (46 a), à la partie supérieure de la structure 2, l'autre (46b), à la partie inférieure de cette dernière . Dans le mode de réalisation précité, les tubes 46a et 46b sont fixes .

On a représenté sur la moitié inférieure de la figure 5 et sur les figures 5A et 5B, un second mode de réalisation possible des systèmes constituant la charpente. Dans ce cas, lesdits systèmes, portant le chiffre de référence 146, qui sont particulièrement bien appropriés pour les engins de grand encombrement, sont constitués chacun de deux bras 146a 146b, articulés l'un à l'autre, l'un (146a) étant articulé autour d'un axe 146c porté par la structure 2, et l'autre (146b), autour d'un axe 146d porté par l'arceau 41 .A l'axe médian 146e, est associée une butée 146f pour éviter l'ouverture complète des bras 146a, 146b . Un câble 146g est relié aux deux articulations externes . Son raccourcissement permet de manoeuvrer l'arceau 41 vers la structure 2, ledit arceau 41 occupant alors la position représentée en traits mixtes sur la figure 5 . De la sorte, on diminue l'encombrement de l'engin 1, par exemple pour faciliter le passage d'écluses .

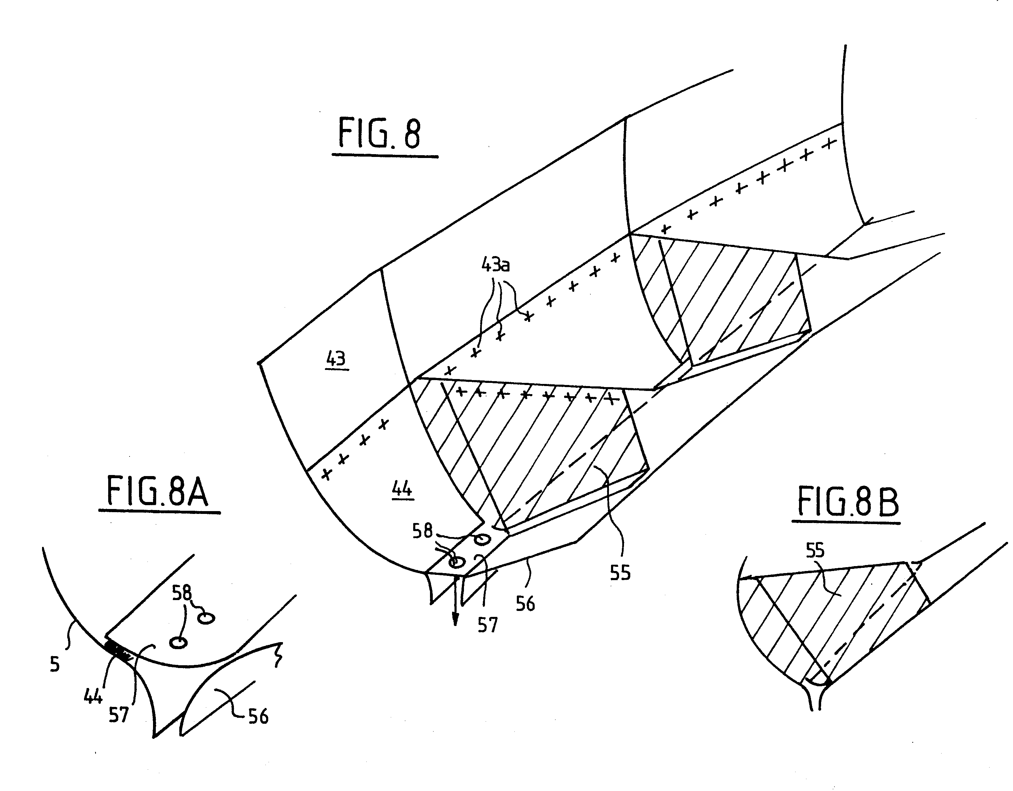

Les sections 42 et 43 de la partie 40 de la jupe 5 sont d'un seul tenant ; la section 44 est fixée à la section 43, par exemple par des boulons, rivets ou clips 43a (figure 8), traversant les deux bordures se chevauchant desdites sections 43 et 44 .

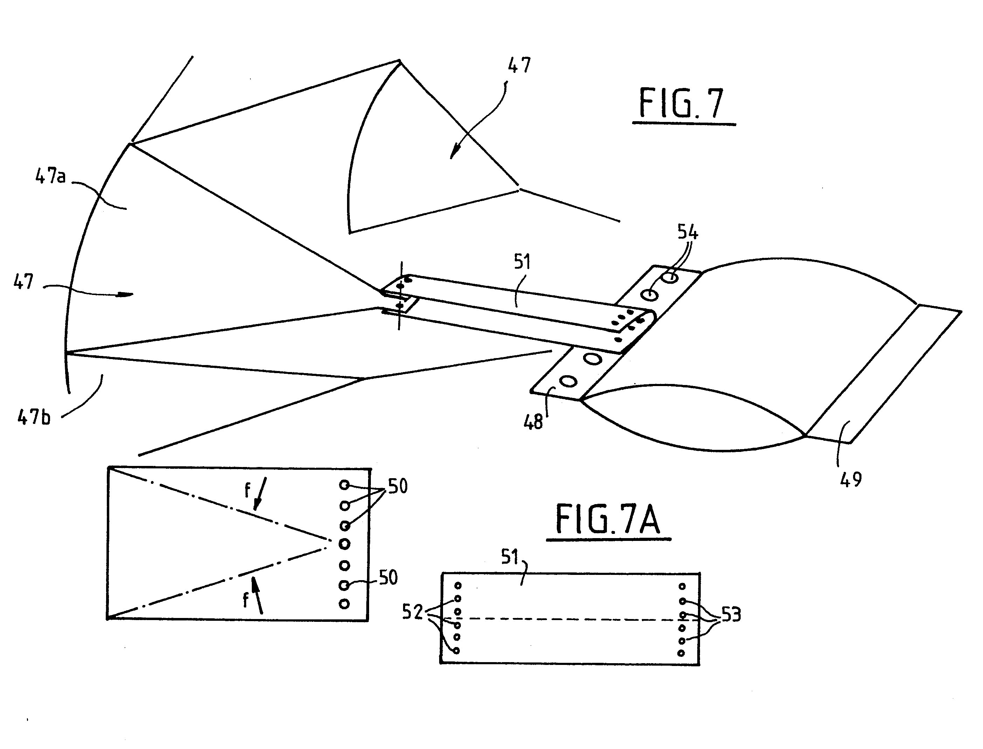

La mise en forme de la jupe 5 dans les sections 43 et 44 est réalisée par des systèmes de toiles 47 disposés, régulièrement espacés dans des plans sensiblement perpendiculaires à ladite jupe 5 . Ces systèmes de toiles 47 relient la jupe 5 avec la bordure longitudinale 48 en regard des muscles inférieurs, 22 ou 23, suivant que l'on se trouve dans les chambres respectivement 13 ou 14. La bordure longitudinale opposée 49 desdits muscles 22 et 23 est, quant à elle, reliée à la superstructure 2 de l'engin 1 (voir notamment figures 7 et 4).

Comme on peut le voir sur les figures 3, 4, 5, 6 et 7, par exemple, chaque système de toiles 47 est constitué par trois toiles supérieures 47a, 47b, 47c et des toiles à contours de quadrilatères comme 47e, 47f,... associées à la section 43 de la jupe 5 et par une toile inférieure 47d, associée à la section 44 ou bande d'usure de ladite jupe 5.

La structure et le montage de ces toiles seront décrits en référence avec les figures 7 et 7A pour les toiles supérieures 47a, 47b et 47c et avec les figures 8, 8A et 8B pour la toile inférieure 47d.

Chaque toile 47a, 47b ou 47c présente une forme rectangulaire et est fixée le long d'une bordure transversale à la section 43 par tout moyen approprié. Le long de la bordure transversale opposée, la toile 47a, 47b ou 47c comporte une rangée de trous 50. Au montage, les deux bordures longitudinales de chaque toile 47a, 47b et 47c sont rapprochées l'une de l'autre, comme symbolisé par les flèches f sur la figure 7, de façon que les trous 50 soient superposés pour constituer, par exemple, une ou deux zones de perforation et les toiles sont assemblées entre elles et aux toiles 47e et 47f... de manière telle que la jupe périphérique 5 soit constamment en condition tendue lors du fonctionnement de l'engin. La liaison du système de toiles avec le muscle 22 ou 23 s'effectue par une bande rectangulaire allongée 51 (figure 7A) dont les deux bordures transversales comportent chacune une rangée de trous, respectivement 52 et 53.

En position d'assemblage, la bande 51 est repliée sur elle-même le long de sa ligne longitudinale médiane, l'extrémité libre d'une toile 47a, 47b, 47c, ou 47e, 47f étant prise en sandwich entre les deux panneaux ainsi superposés de la bande 51, de sorte que les zones perforées constituées par les trous 50 et les trous 52 viennent en regard, ce qui permet le passage de moyens ou organes de liaison comme des boulons ou analogues.

La fixation de la bande 51 au muscle 22 ou 23 est réalisée suivant le même principe, excepté que l'ensemble constitué par les deux panneaux superposés de la bande 51 est appliqué sur ou sous la bordure 48 dudit muscle 22 ou 23, afin de constituer une seule zone de liaison, le moyen de liaison coopérant avec des trous 53 et certaines parmi des perforations 54 pratiquées sur la bordure 48 .

La toile 47d associé à la bande d'usure 44 présente une particularité, destinée à constituer, dans cette partie basse de la jupe 5, un renforcement de la structure.

A cet effet, la toile 47d est associée à une seconde toile de renforcement 55 que l'on peut voir sur les figures 8 et 8B. La toile de renforcement 55 est reliée, le long de sa bordure supérieure, par exemple par boulonnage, à la bordure supérieure de la toile 47d, et, le long de sa bordure inférieure, à une bande d'usure 56 disposée en regard de la bande d'usure 44. Les bandes 44 et 56 sont reliées par une bande étroite intérieure 57 dont les bordures longitudinales sont fixées chacune, par tout moyen approprié, au voisinage des bordures inférieures des bandes respectivement 44 et 56, comme on peut mieux le voir sur la figure 8A. La bande 57 présente une succession de perforations centrales 58 . Sont donc laissées libres les deux zones de bordure inférieure des bandes 44 et 56, constituant deux volets continus libres .

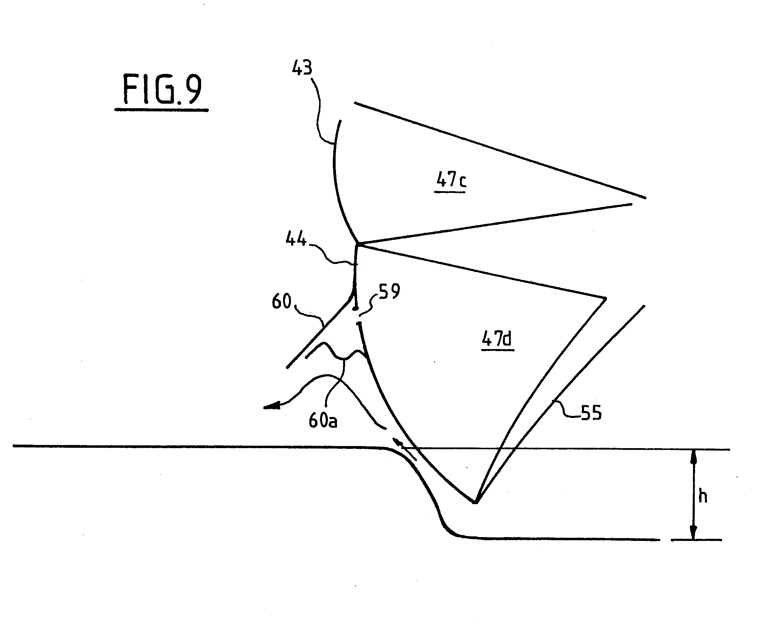

La figure 9 illustre le dispositif que présente extérieurement la bande d'usure 44 pour rabattre les embruns ou les poussières, au cours de la marche de l'engin 1. La bande 44 présente, au voisinage de sa bordure supérieure, une fente 59 . De part et d'autre de cette fente 59, sont disposés, de façon extérieure, d'une part, un rabat supérieur mobile 60 , et, d'autre part, un volet souple inférieur 60a .

## LE BOUDIN PERIPHERIQUE 32 ET LES BOUDINS INTERIEURS 33 ET 34

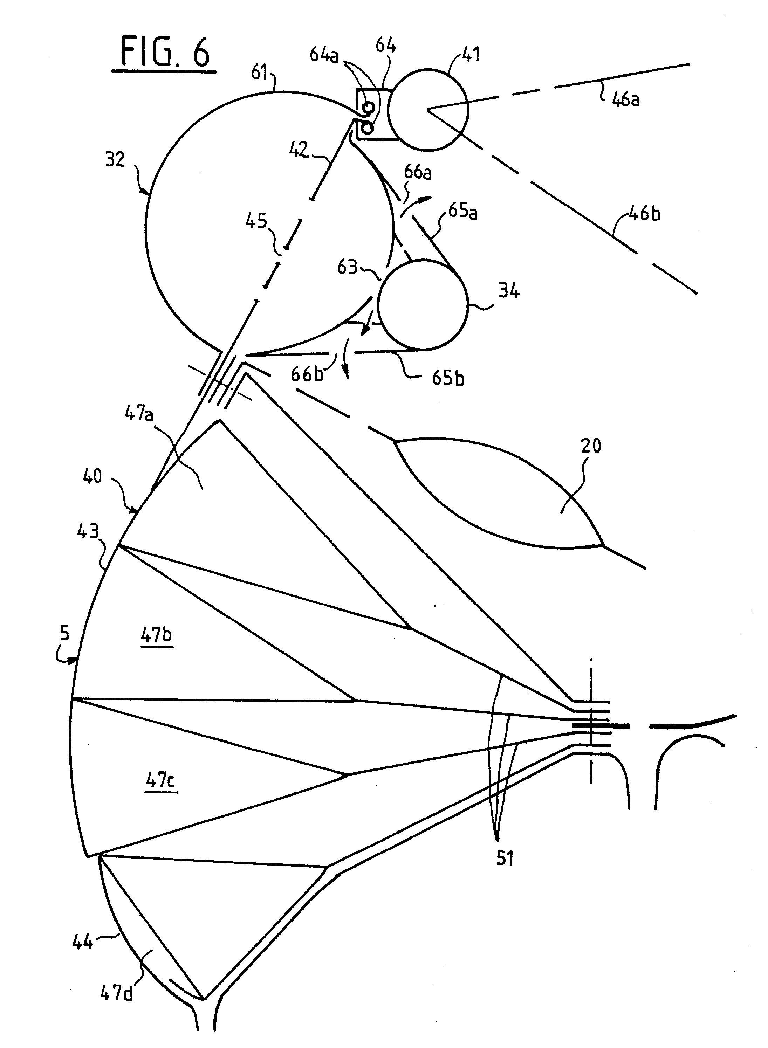

A la zone perforée ou poreuse 42 de la partie 40 de la jupe 5, est associé le boudin périphérique 32 (figure 6), constitué par deux bandes 61, 62, l'une (61) disposée à l'extérieur de la partie poreuse 42, et l'autre (62), à l'intérieur, le montage étant représenté schématiquement sur la figure 6 . Ainsi, les bandes 61 et 62 pénètrent, par l'une de leurs bordures , rigidifiée par des tiges flexibles 64a, dans un tube 64 associé à l'arceau 41, et, par leurs bordures opposées, elles sont fixées, par exemple par boulonnage, à la toile constituant les sections 42 et 43 de la jupe 5 .

La bande intérieure 62 présente une succession de perforations centrales 63 . Contre cette bande intérieure perforée, est disposé le boudin 33 (ou le boudin 34), lequel est maintenu contre le boudin 32, par deux bandes latérales 65a et 65b, présentant des perforations centrales respectivement 66a et 66b .

## LES CLOISONS 17 ET 18

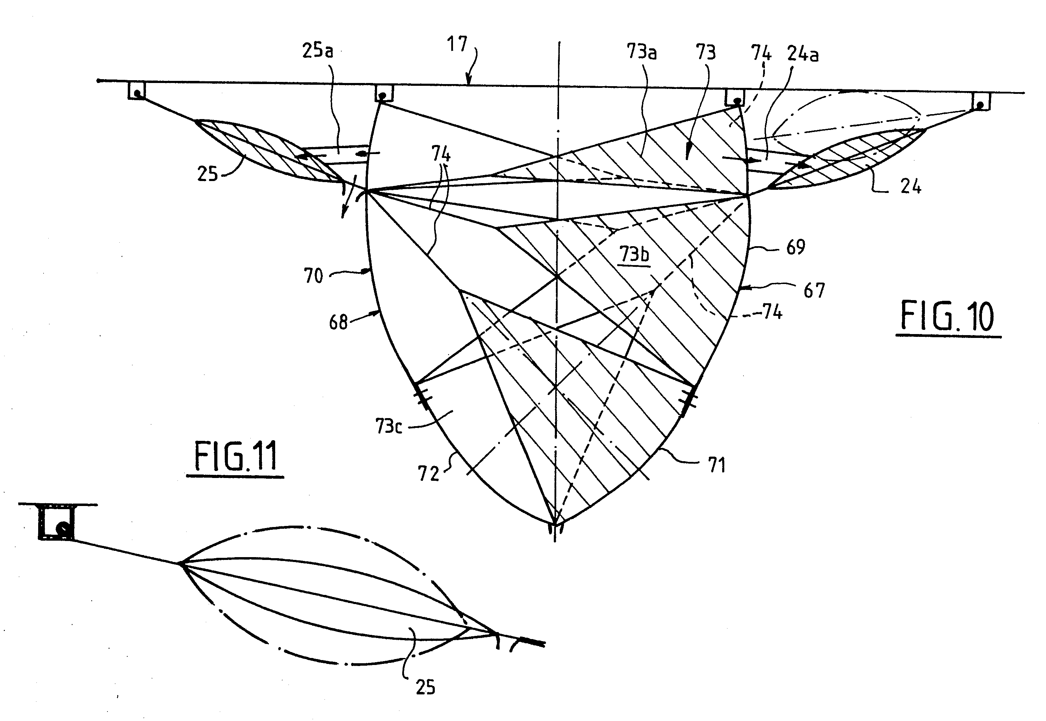

Leur description sera faite maintenant en référence à la figure 10, notamment.

Chaque cloison 17 ou 18 se compose de deux parois opposées 67 et 68, chacune comportant une bande principale, respectivement 69 et 70 et une bande d'usure inférieure, respectivement 71 et 72. La mise en forme de ces parois 67 et 68 est réalisée par des systèmes de toiles 73, disposés de place en place et constitués chacun par deux demi-systèmes dont chacun est sensiblement analogue à un système 47 associé à la jupe 5 .

On retrouve ainsi un demi-ensemble constitué de deux toiles supérieures 73a et 73b, analogues en ce qui concerne la structure et le montage aux toiles 47a à 47c décrites précédemment, et associées aux bandes principales 69 et 70 et d'une toile inférieure 73c, analogue à la toile 47d et associée à la bande d'usure 71 ou 72.

Toutes les bandes de liaison 74 (qui sont analogues dans leur structure et leur montage aux bandes 51 décrites ci-dessus) associées aux toiles 73a à 73c d'un demi-ensemble sont fixées, par leur extrémité opposée auxdites toiles 73a à 73c, à l'un des deux muscles associés à la cloison considérée. Il existe en effet, pour chaque ensemble, un second demi-ensemble de toiles, immédiatement adjacent au premier et parallèle à celui-ci, qui est disposé symétriquement par rapport au plan moyen de la cloison, et qui est relié au muscle symétrique .

Par ailleurs, les deux bordures inférieures des bandes d'usure 71 et 72 constituent deux volets continus en regard .

Comme on peut le voir sur la figure 1, les extrémités des cloisons longitudinale 17 et transversal 18 s'avancent dans l'espace périphérique du coussin d'air délimité par la jupe 5 . A ce niveau, au moins l'une des deux bandes opposées délimitant chaque cloison 17 ou 18 comporte au moins un orifice 75 ( figure 1) faisant communiquer l'espace précité et la zone intérieure de la cloison 17 ou 18 considérée .

## LA CANALISATION 19

Elle comporte successivement une première branche souple 76, disposée dans l'axe de la branche 11, figure 2 puis une seconde branche souple 77, perpendiculaire à la première, à partir de laquelle elle se divise en deux bras, le premier (78) qui bifurque en direction de la soufflante 8 et qui, par des canaux de liaison 79 et 80, alimente les muscles respectivement 20 et 22 de la chambre 13, et le second (81) qui s'étend jusqu'à l'extrémité avant de l'engin 1 . Ce second bras 81 présente la particularité de se diviser en deux parties superposées ; la demi-moitié supérieure alimente, dans la chambre 13, d'une part, le muscle 20, par le canal de liaison 82, et, d'autre part, le muscle 22, par le canal de liaison 83 ; quant à la demi-moitié inférieure, elle alimente, dans la chambre 14, d'une part, le muscle 21, par des canaux de liaison 84 et 85, et, d'autre part, le muscle 23, par les canaux de liaison 86 et 87 .

## LES MUSCLES 20 à 23 et 24 à 31

### Descriptif général

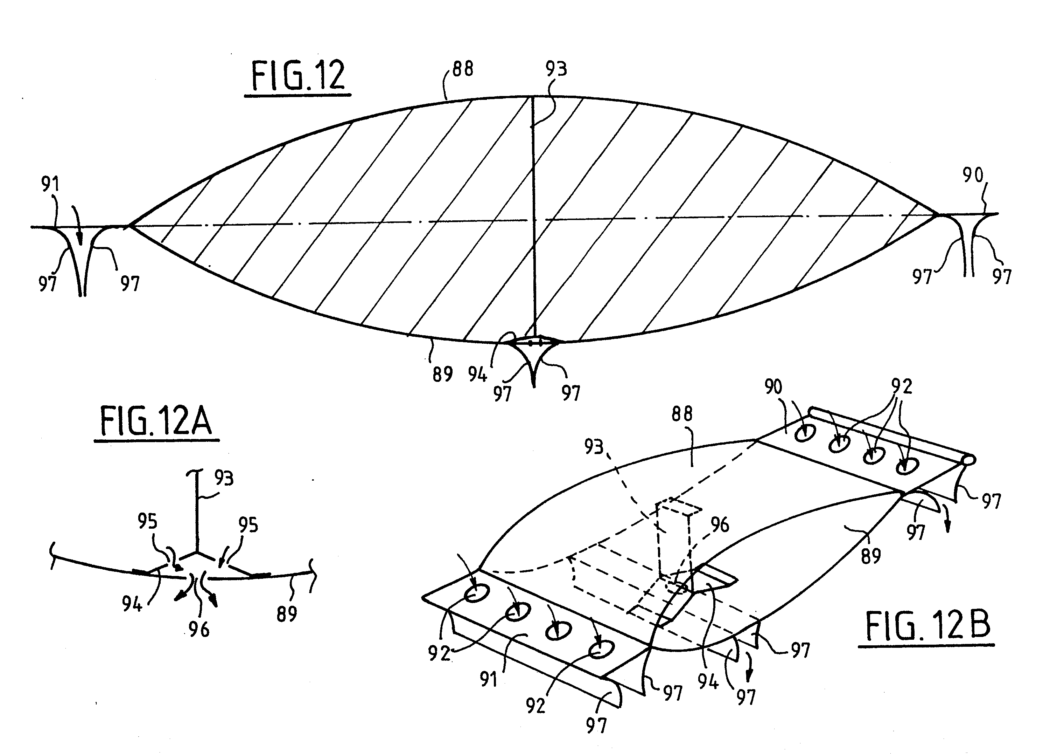

Ce descriptif sera donné en référence aux figures 12, 12A et 12B . Chaque muscle est constitué de deux bandes superposées 88 et 89, réunies le long de leurs deux bordures 90 et 91, de manière à constituer deux lisières en double épaisseur, présentant chacune une succession de trous 92 . De place en place, sont montés, à l'intérieur de l'espace situé entre les bandes 88 et 89, des organes du type soupape composés chacun d'une bande principale 93 disposée perpendiculairement à la bande 88, dans le plan longitudinal moyen du muscle, ladite bande 93 étant reliée, à son extrémité opposée à la bande 88, le long de la ligne transversale moyenne d'une bande 94 qui présente, de part et d'autre de sa zone de jonction avec la bande 93, des ouvertures 95 (figure 12A), et qui est fixée, par ses deux bordures transversales opposées, à la bande inférieure 89. Celle-ci présente, au droit de la région médiane de la bande 94, un trou 96.

Particularités des muscles inférieurs 22 et 23 associés à la jupe 5 et des muscles 24 à 31, associés aux cloisons 17 et 18.

Les muscles représentés sur les figures 12, 12A et 12B sont en fait des muscles du type susindiqué. On remarque donc sur la figure 12B notamment que ces muscles présentent, à leur partie inférieure, trois paires de volets longitudinaux 97 permettant le guidage de l'air sortant des deux rangées latérales de trous 92 et de la rangée centrale de trous 96. (Les muscles supérieurs 20 et 21 ne comportent pas de tels volets).

Comme on l'a indiqué en référence à la description de la jupe 5 et de ses moyens de mise en forme, les muscles inférieurs 22 et 23 sont disposés entre les systèmes de toiles 47 et la base de la structure 2. Quant aux muscles 24 à 31, ils s'accrochent, le long de leurs bordures opposées, aux cloisons 17 et 18, également sous la structure 2 •

Particularités des muscles supérieurs 20 et 21

Ils s'étendent au-dessus des systèmes de toiles 47 et se raccordent, le long d'une de leurs bordures, à la jupe 5, juste au-dessous du boudin 32 (figure 6), et, le long de leur bordure opposée, au même endroit de la structure 2 auquel se raccordent les muscles inférieurs 22 et 23 (figure 1). Les moyens de liaison sont constitués par des toiles perforées.

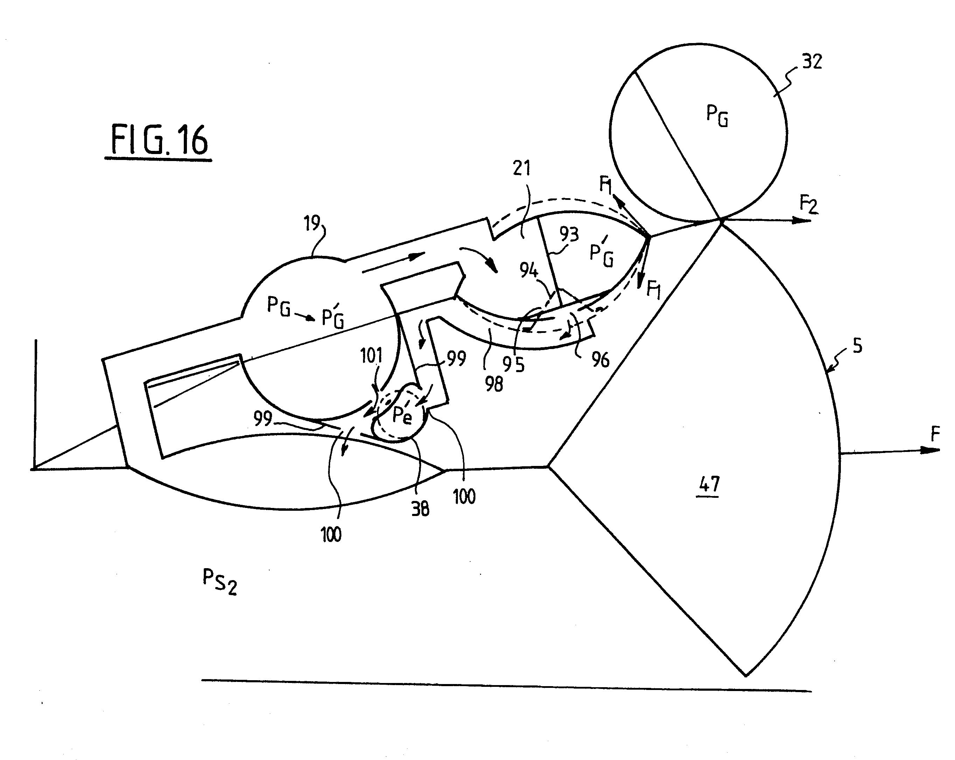

Une autre particularité est que, dans la chambre avant 14, l'une des soupapes du muscle 21 alimente, par un tube coudé 98 disposé sous ledit muscle 21, le boudin 38 qui est destiné à réguler la pression dans la canalisation générale 19 ; on peut voir ce montage sur la figure 4, et sur la figure 16.

Les muscles associés aux cloisons

Leur système d'attache à la cloison 17 ou 18 a déjà été décrit. Le long de leur bord opposé, ils sont attachés à la base de la structure 2 (figure 10) par des toiles. La toile les reliant aux systèmes 73 est perforée. Par ailleurs, ils sont alimentés par des canaux (notés 24a et 25a sur la figure 10, car étant associés aux muscles 24 et 25).

LE BOUDIN 38

On l'a représenté notamment sur la figure 16. Il est en communication avec le tube coudé 98. Par ailleurs, il est maintenu contre la canalisation 19 par des bandes 99 dotées de trous 100.

La canalisation 19 comporte en outre un trou 101 en regard du boudin 38.

Dans la description qui va suivre du fonctionnement de l'engin 1, on désignera par PG, ou pression génératrice, la pression de l'air délivré par la soufflante 8 dans les muscles 20 à 23, par PS av. et PS arr., la pression statique de sustentation qui règne dans les chambres de sustentation, respectivement à l'avant et à l'arrière, aux débits de fuite près, l'engin 1 étant en position horizontale par rapport à la surface sur laquelle il évolue. La PS arr. est toujours un peu plus grande que la PS av., du fait que le centre de gravité est toujours déporté vers l'arrière.

MISE EN ROUTE

Supposons que l'engin 1 se trouve sur mer. Il flotte sur sa coque centrale, les roues 4 étant relevées. On met en marche la soufflante 8 qui alimente d'abord la canalisation principale 19. Les muscles 20 à 23 sont gonflés en premier ; une fois les muscles 20 à 23 gonflés au maximum, la soufflante 8 débite ensuite dans le boudin périphérique 32 par suite de l'effet Pitot. A ce moment, l'alimentation générale du coussin se fait à travers le boudin périphérique 32, par l'intermédiaire des tubes 33 et 34 qui règlent le débit propre à chacune des chambres. Les cloisons longitudinale 17 et transversale 18 sont gonflées, l'air y pénétrant par les orifices 75.

L'engin 1 se lève pour se placer en vol stationnaire jusqu'à sa position d'équilibre. Le bas de la coque est à une hauteur H, par exemple de 1 m, la hauteur de fuite $\underline{h}$ étant de l'ordre de 10 mm (voire inférieure à 10 mm) dans le bas de la jupe 5.

Les roues 4 étant relevées, la commande en Z 3 de l'hélice est actionnée (position basse), si bien que l'engin 1 se déplace avec sa propulsion aquatique, la dirigeabilité s'effectuant par la rotation du Z commandant l'hélice 3, la turbine 8 débitant à vitesse constante. Le bas de la coque est maintenu à une hauteur constante par rapport à la surface de l'eau, par la régulation due aux clapets des muscles 22, 23 et 24 à 30, qui assurent une position d'équilibre constante.

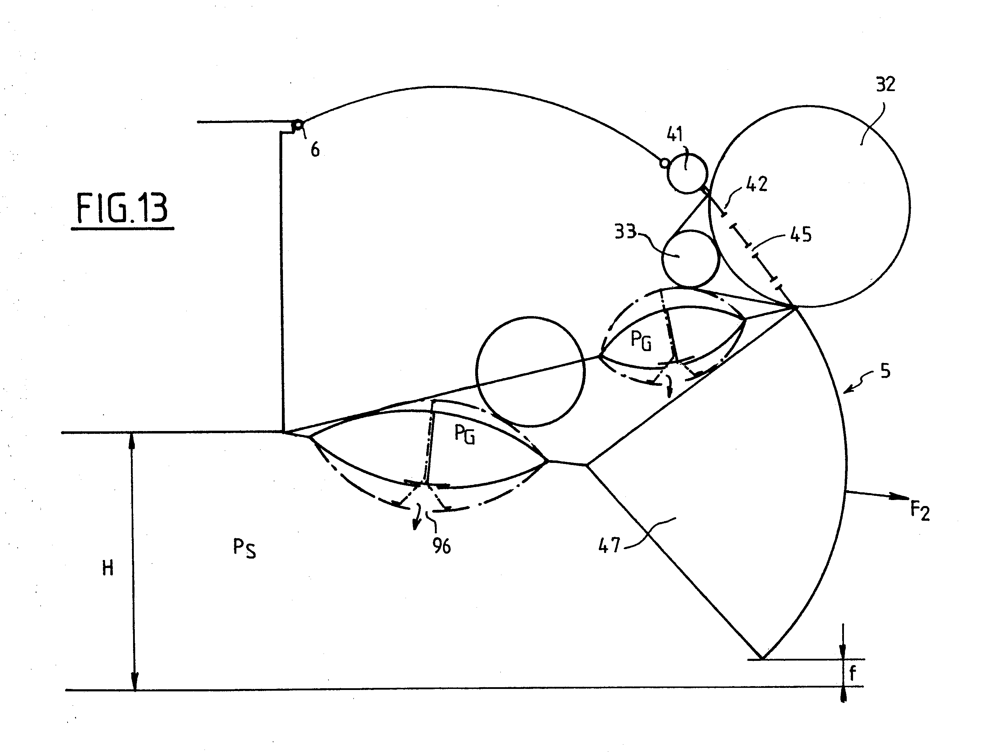

Pour illustrer cette régulation, on se référera au schéma explicatif de la figure 13. Si la pression statique PS, par suite de la variation de la position du centre de gravité ou de la variation du chargement, diminue dans n'importe quelle chambre, la jupe 5 se rétracte, les muscles inférieurs 22 et 23, de même que les muscles supérieurs 20 et 21 se gonflent, ce qui est représenté en traits mixtes sur la figure 13, les trous de fuite 96 s'ouvrent, la pression interne PG des muscles 20 à 23 chute pour retrouver une valeur d'équilibre nouvelle proche de la première (au millimètre près) et, en conséquence, l'appareil est stabilisé à sa hauteur de vol.

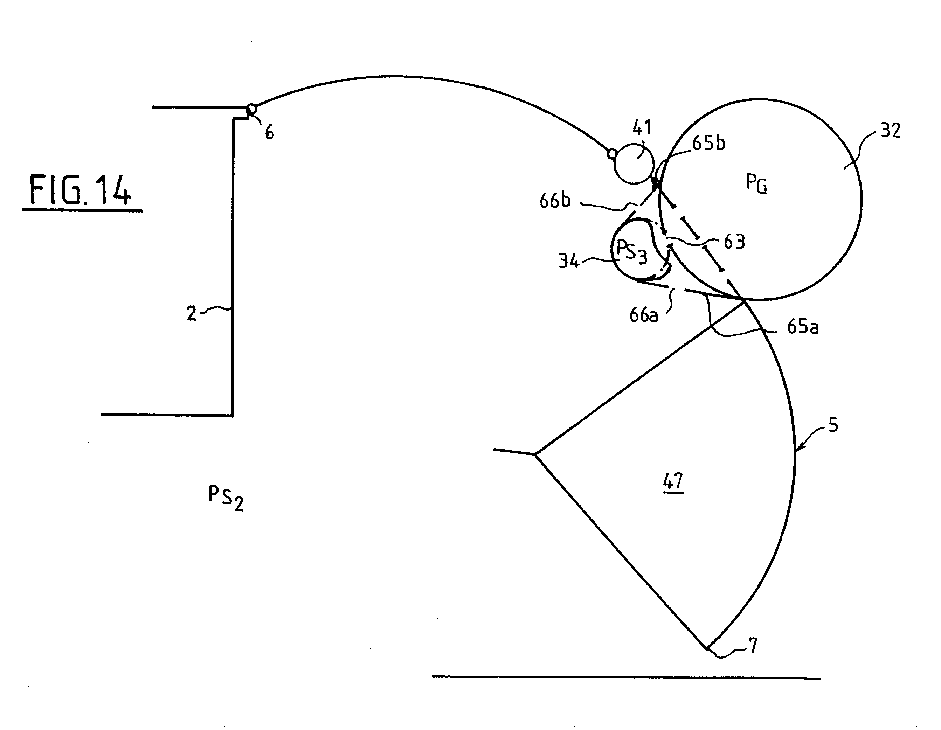

Supposons maintenant que l'engin 1 soit en vol stationnaire. La pression statique dans la chambre arrière 13 est supérieure à la pression statique dans la chambre avant 14. Il en résulte que le boudin 34 de la chambre avant 14 se trouve à la pression statique qui règne dans le boudin 33 par suite de l'ouverture du clapet 37 du boudin 34. Dans ces conditions, les trous 45 sont occultés partiellement par le boudin 34, qui passe dans la position représentée en traits mixtes sur la figure 14 et donne aux trous 63 du boudin périphérique 32 associé à la chambre avant 14 les mêmes conditions de sortie qu'aux trous 63 du boudin 32 associé à la chambre arrière 13. Il en résulte un même débit de fuite dans les deux chambres avant et arrière.

Bien entendu, la situation est la même pour la moitié gauche de l'engin 1. Il en résulte un débit uniforme dans tout l'engin 1, quel que soit son chargement et la position de son centre de gravité et, indépendamment des obstacles rencontrés.

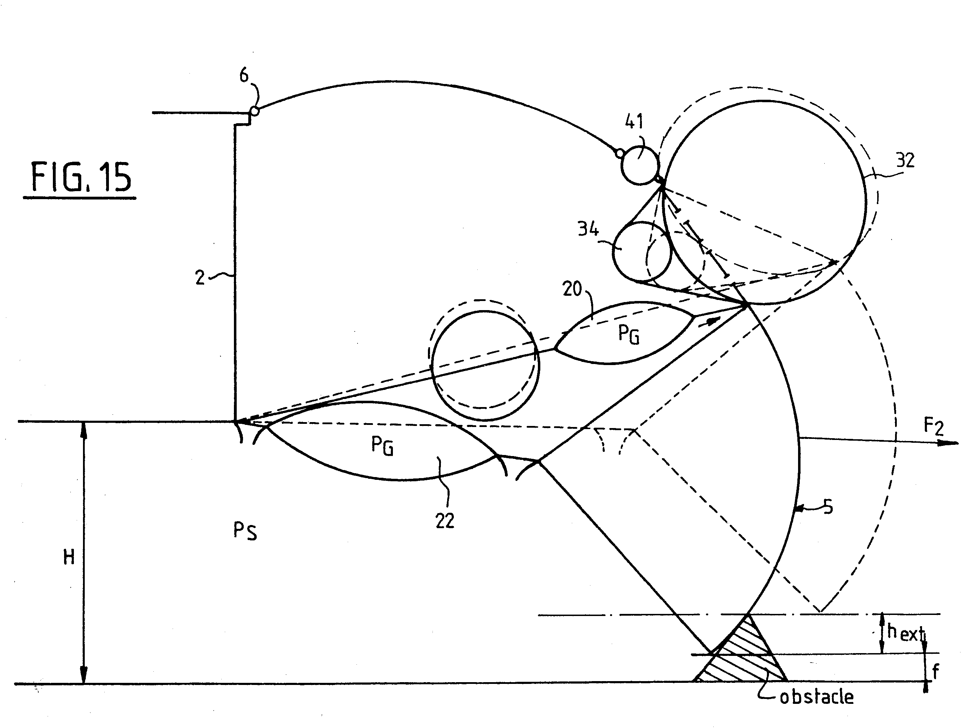

On expliquera maintenant les phénomènes qui se produisent lors de la rencontre d'un obstacle ou lors d'une perturbation dynamique (par exemple, changement de plan par rencontre d'une vague). On se reportera à cet effet au schéma de la figure 15.

Lors de la rencontre de l'obstacle 0, la force de traction $F_2$ qui s'exerce sur la jupe 5 augmente, la pression différentielle entre la pression PG régnant dans les muscles et la pression statique PS chute, les muscles s'allongent (leur nouvelle position est représentée en pointillés sur la figure 15), et l'on obtient un mouvement de relevée de la jupe 5. Le déplacement de la jupe 5 s'effectue sur une hauteur $h_{ext}$, d'où il résulte que la hauteur d'amortissement augmente considérablement ; elle peut même être multipliée par 20. La coque se déplaçant de cette hauteur, on amortit non plus sur une hauteur $\underline{h}$ mais sur une hauteur pouvant atteindre $20\underline{h}$, pouvant être en moyenne de $10\underline{h}$.

Le déplacement du muscle supérieur 20 (ou 21) équilibre directement la partie supérieure du boudin 32 et empêche d'avoir un muscle inférieur 22 (ou 23) de trop grande dimension, et permet en même temps de piloter la trajectoire du déplacement de la jupe 5, avec une variation de volume négative.

On expliquera maintenant, en référence à la figure 16, comment on s'arrange pour avoir des réponses aux diverses sollicitations qui soient identiques quel que soit le chargement. Autrement dit, si la fréquence propre initiale est réglée autour de 2 Hz, on s'arrange pour que cette fréquence propre reste à la même valeur indépendamment du chargement et de sa répartition (mouvement des passagers, poids du carburant, des charges, etc.).

La solution choisie est celle de réguler la pression génératrice alimentant les muscles de la chambre avant 14.

Si la pression statique PS dans la chambre arrière 13 est inférieure à la pression statique PS dans la chambre avant 14, le muscle 21 se rétracte, la pression s'y établissant a une valeur P'G < à PG. A ce moment-là, l'air s'était échappé par le conduit 98 pour passer dans le boudin 38 dans lequel s'était établie la pression P'G. Ce boudin 38 occultait le boudin d'alimentation générale 19 dans la région avant de la jupe avant 5 dans lequel régnait une pression initiale de PG. Comme P'G est inférieur à PG, le trou 45 est libéré et entraîne la chute de PG à P'G dans la canalisation 19 qui alimente le muscle 21. Ainsi, le boudin 38 est un boudin de régulation de l'alimentation des muscles avec la pression génératrice P'G initialement prélevée. Ceci permet d'avoir une raideur nouvelle sur le rappel de la jupe 5 et la même réponse quel que soit le chargement de l'engin 1.

Pour, en outre, également s'affranchir des variations de pression délivrée par la soufflante 8 en ce qui concerne la fréquence propre de l'engin, une régulation par la chambre arrière 13 est également prévue.

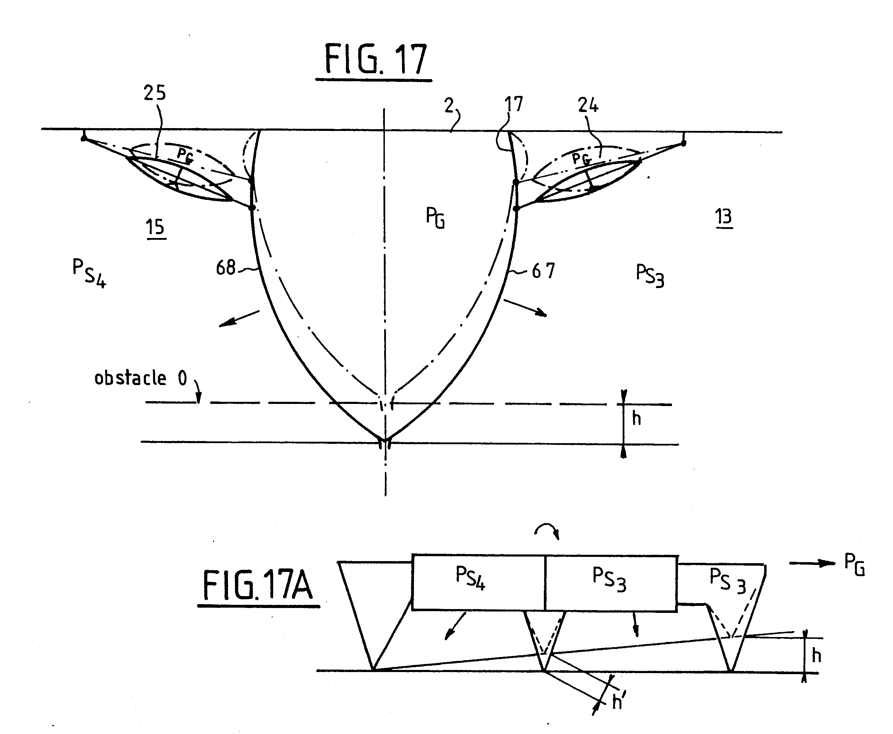

Examinons maintenant la situation concernant les cloisons longitudinale 17 et transversale 18. En position stationnaire, les muscles associés aux cloisons internes sont à une pression PG, de la même façon que l'espace interne de ces cloisons 17 et 18. Quand un obstacle se présente, les cloisons associées supportent la pression à travers l'obstacle, et les muscles ont une traction supérieure et mettent l'ensemble des cloisons jusqu'à une nouvelle position d'équilibre par rapport à l'obstacle, en diminuant la surface de frottement en contact avec l'obstacle (position en traits interrompus sur la figure 17). Il en résulte une diminution des traînées.

Si l'appareil est en roulis (changement de pente), sur la partie où la hauteur de fuite diminue, par exemple la partie droite sur la figure 17A, la pression statique dans la chambre arrière 13 tend vers la pression génératrice PG. Le muscle 24 n'a plus de force. Le muscle 25 va se contracter et va tirer la partie 67 de la cloison 17 jusqu'à l'ouverture de son clapet interne, qui va donner un déplacement de ladite partie 67 de la cloison 17 proportionnel à l'angle de roulis d'amortissement que l'appareil aura subi, puisque la jupe extérieure, du fait de sa mobilité, induit un angle de roulis d'amortissement.

On expliquera maintenant le fonctionnement du déflecteur d'embruns, qui a été représenté sur la figure 9. En vol stationnaire, l'air étant éjecté entre l'eau et le bas de la jupe 5 provoque une remontée d'eau en gouttelettes, qui sont rabattues par le déflecteur 60. Dans ce mouvement, le volet souple 60a se soulève et empêche la pénétration de l'eau à l'intérieur du coussin d'air par les orifices 44.

C'est un fonctionnement analogue à celui décrit ci-dessus qui est mis en oeuvre pour un déplacement terrestre ou en eau peu profonde. Dans ce cas, toutefois, le dispositif 3 de propulsion à hélice est en position haute, comme montré en trait mixte sur la figure 2 et le dispositif 4 à roues et au moins deux hélices carénées 4a, est en position basse. L'engin est alors dirigé à partir du moteur M ou d'un autre moteur et d'une chaîne cinématique de commande du dispositif 4, comprenant, de façon en soi connue, un embrayage E auquel sont associés une boîte de vitesses et un différentiel D, figure 5. La régulation de la sustentation, du passage d'obstacles et de la réponse aux sollicitations sont comme décrits ci-dessus pour le déplacement sur l'eau.

## Revendications

1. Engin de transport à effet de surface comportant une structure sustentée (2) par coussin d'air sous pression engendré à partir d'une soufflante (8) et des moyens de propulsion, caractérisé en ce que lesdits moyens de propulsion sont indépendants des moyens assurant la sustentation et comportent :

. au moins un dispositif escamotable à hélice (3) propre à être rendu opératoire lors d'un déplacement sur l'eau et non-opératoire lors d'un déplacement sur terre ; et

. au moins un dispositif escamotable (4) à roues (ou à moyens équivalents) pour le déplacement sur terre ou en eau peu profonde, qui est rendu opératoire lorsque le dispositif à hélice est escamoté dans sa condition non-opératoire et vice-versa.

2. Engin selon la revendication 1, caractérisé en ce que le dispositif (4) pour le déplacement sur terre, en eau peu profonde ou sur des terrains du type marécageux comprend au moins deux hélices latérales carénées (4a) opératoires lorsque le dispositif (3) d'hélice de propulsion sur l'eau est escamoté dans sa condition non-opératoire.

3. Engin selon la revendication 1, caractérisé en ce que la structure sustentée comprend des moyens qui commandent simultanément la sustentation proprement dite, l'assiette de l'engin ainsi que sa stabilité lors du franchissement d'un obstacle ou lors d'une perturbation dynamique, lesdits moyens assurant aussi une identité de réponse de l'engin aux diverses sollicitations quelle que soit la charge de celui-ci.

4. Engin selon la revendication 3, caractérisé en ce que la structure sustentée est divisée en au moins deux chambres où règnent des pressions statiques de sustentation asservies l'une à l'autre par lesdits moyens de commande et/ou contrôle.

5. Engin selon la revendication 4, caractérisé en ce qu'il comprend au moins quatre chambres (13, 14, 15, 16) limitées à leur périphérie externe par une jupe (5) souple et de forme modifiable et intérieurement par une cloison longitudinale (17) sensiblement médiane ainsi qu'une cloison transversale (18), sensiblement orthogonale à la cloison longitudinale, lesdites cloisons longitudinale et transversale (17, 18) étant elles aussi de forme modifiable et communiquant avec l'espace périphérique du coussin d'air limité par la jupe (5) par l'intermédiaire d'au moins un orifice (75).

6. Engin selon la revendication 5, caractérisé en ce que la jupe périphérique (5) comporte au moins deux parties dont la première (39) est fixée, d'une part, à la structure sustentée (2) et, d'autre part, à au moins un arceau (41) ayant en plan sensiblement la forme du plat-bord de l'engin, la seconde partie (40) de la jupe étant fixée à sa partie supérieure audit arceau (41) et s'étendant à partir dudit arceau jusqu'au voisinage de la surface sur laquelle se déplace l'engin.

7. Engin selon la revendication 6, caractérisé en ce que l'arceau (41) est relié à la structure sustentée (2) par une charpente déformable articulée (Fig. 5A, 5B).

8. Engin selon la revendication 6, caractérisé en ce que la seconde partie (40) de la jupe périphérique (5) comprend une section (42) adjacente à l'arceau (41), percée d'une pluralité d'ouvertures (45) et des sections (43, 44) dont la première (43) est d'un seul tenant avec celle à perforations et dont la seconde (44), - qui forme bande d'usure -, est fixée à la première par des boulons ou analogues (45a).

9. Engin selon la revendication 5, caractérisé en ce que la modification de forme de la jupe périphérique (5) et des cloisons (17, 18) est commandée par des moyens de "muscles" pneumatiques (20-23 ; 24-31).

10. Engin selon les revendications 5 et 9, caractérisé en ce que la modification de forme de la jupe périphéri que (5) et des cloisons (17, 18) est commandée à partir des muscles par des systèmes de toiles (47 ; 73) disposés perpendiculairement à ladite jupe (5) et/ou aux parois (67, 68) limitant lesdites cloisons longitudinale et transversale (17, 18), la liaison d'un système de toiles au muscle qui lui est associé étant effectuée à l'aide d'un tirant comme une bande (51) ou analogue.

11. Engin selon la revendication 10, caractérisé en ce que la bande de liaison (51) d'un système (47) de toiles au muscle qui lui est associé est repliée sur elle-même le long de sa ligne longitudinale médiane et présente des bords transversaux comportant chacun une rangée de trous (52, 53) pour le passage d'organes de fixation, comme des boulons ou analogues, au système de toiles, d'une part, et au muscle qui lui est associé d'autre part.

12. Engin selon la revendication 10, caractérisé en ce que le système de toiles (47) associé à la jupe périphérique (5) comprend des toiles de forme triangulaire après pliage (47b, 47c, 47d) et des toiles à contour de quadrilatères (47e, 47f...) réunie sentre elles de manière telle que ladite jupe périphérique (5) est constamment en condition tendue lors du fonctionnement de l'engin.

13. Engin selon les revendications 8 et 10, caractérisé en ce que les systèmes de toiles (47d) associés à la bande d'usure (44) de la jupe périphérique (5) sont renforcés par une seconde toile (55) à laquelle est associée une seconde bande d'usure (56) disposée en regard de la bande d'usure (44) et à distance de celle-ci, avec interposition, entre les deux dites bandes d'usure, d'une bande (57) à perforations centrales (58).

14. Engin selon la revendication 8, caractérisé en ce qu'à la bande d'usure (44) sont associés sur la face externe de celle-ci, un rabat (60) et un volet (60a) déflecteurs d'embruns et/ou de poussières rencontrés lors du déplacement de l'engin sur l'eau ou sur terre.

15. Engin selon la revendication 9, caractérisé en ce que les muscles (20-23 ; 24-31) comprennent chacun deux bandes souples superposées (88, 89) enfermant en leur intérieur des organes du type soupape, les bordures (90, 91) le long desquelles sont réunies les deux dites bandes ménageant des moyens de liaison (48, 49) aux systèmes de toiles, d'une part, et à la structure sustentée (2) d'autre part.

16. Engin selon la revendication 15, caractérisé en ce que les organes du type soupape sont ménagés par des dispositifs à bandes (93, 94) percés d'orifices de passage d'air.

17. Engin selon la revendication 9, caractérisé en ce que les muscles inférieurs (22, 23) associés à la jupe périphérique (5) et les muscles (24, 31) associés aux cloisons longitudinale et transversale (17, 18) comportent, en outre, des volets longitudinaux (97) de guidage de l'air susceptible de s'échapper par des perforations (92) disposées suivant des rangées latérales aux deux extrémités longitudinales desdits muscles et suivant une rangée centrale de trous (96) ménagés dans une des parois (89) desdits muscles.

18. Engin selon l'une quelconque des revendications 1 et 9 à 17, caractérisé en ce qu'il comprend, pour l'alimentation des muscles de commande de la jupe périphérique (5) à partir de la soufflante (8) une canalisation (19) et, pour l'alimentation générale du coussin d'air de sustentation, un boudin périphérique externe (32) coopérant avec la première partie perforée (42) de la jupe (5) et des boudins intérieurs (33, 34) associés au boudin périphérique externe (32) par des bandes latérales (65a, 65b) à perforations centrales (66a, 66b).

19. Engin selon la revendication 18, caractérisé en ce que les boudins intérieurs (33, 34) sont en communication, à leur extrémité (35), avec l'espace intérieur des cloisons longitudinale et transversale (17, 18) auxquelles ils sont adjacents par l'intermédiaire d'une canalisation (36) à clapet (37).

20. Engin selon la revendication 9, caractérisé en ce que les muscles (24, 25) de manoeuvre des cloisons longitudinale et/ou transversale (17, 18) sont commandés à partir de la pression régnant dans lesdites cloisons auxquelles ils sont reliés par des canaux (24a, 25a), respectivement.

21. Engin selon la revendication 18, caractérisé en ce qu'il comprend en outre, pour réguler la pression d'air issu de la soufflante (8) dans la canalisation de distribution (19), un boudin (38) disposé à proximité de la zone d'entrée de ladite canalisation (19) dans la chambre avant (14) et/ou arrière de l'engin, ledit boudin étant en communication avec le muscle supérieur (21) disposé dans ladite chambre avant (14) et/ou arrière par l'intermédiaire d'une tubulure (98), le boudin étant en outre maintenu au contact de la canalisation (19) par des bandes (99) à perforations (100).

22. Engin selon les revendications 17 et 21, caractérisé en ce que sa stabilisation à hauteur de vol, en réponse à une variation de la position du centre de gravité ou de la charge entraînant une variation de la pression statique (PS) dans les chambres de sustentation, est commandée par les muscles inférieurs (22, 23) et les muscles supérieurs (20,21) dont la pression interne (PG) est réglée par les trous de fuite (96) des parois desdits muscles.

23. Engin selon la revendication 22, caractérisé en ce qu'en vol stationnaire le débit de fuite est sensiblement le même dans les chambres de sustentation avant et arrière, les pressions statiques (PS) dans lesdites chambres étant régulées à partir des boudins intérieurs (33,34) munis de clapets (37), d'une part et, par les boudins périphériques externes (32) à trous de fuite (63) associés aux chambres avant et arrière, d'autre part.

24. Engin selon l'une quelconque des revendications précédentes, caractérisé en ce que lors du franchissement d'un obstacle provoquant une chute du différentiel de pression entre celle (PG) régnant dans les muscles et celle (PS) régnant dans les chambres, un allongement des muscles entraîne un mouvement de relevé de la jupe (5) qui multiplie la hauteur d'amortissement par un facteur de l'ordre de 10 à 20.

FIG.1

# FIG. 2

0270397

FIG. 3

FIG. 4

0270397

FIG.5

FIG.5A

FIG.5B

0270397

## FIG. 6

0270397

FIG.7

FIG.7A

FIG. 8

FIG.8A

FIG.8B

43a

43

44

58

57   56   55

5

44   57   56

55

0270397

## FIG.9

43

47c

44

60

59

47d

55

60a

h

FIG.10

FIG.11

FIG.12

88 93

91

97 97

90

97 97

89 94 97 97

FIG.12A

93

95 95

94 96 89

FIG.12B

90 92

93 88

96

97

97

89

92 91 92 97 94 97

97

0270397

FIG.13

0270397

FIG.14

FIG.15

0270397

FIG.16

F, F2, F1, 5, 47, 32, $P_G$, $P'_G$, 21, 93, 94, 95, 96, 98, 99, 100, 101, 38, 19, $P_e$, $P_{S_2}$, $P_G \rightarrow P'_G$

# FIG. 17

# FIG.17A

0270397

# FIG.18

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | FR-A-2 002 008 (BRITISH HOVERCRAFT) <br> * Page 2, lignes 6-14; page 3, lignes 28-35 * | 1,2 | B 60 V 1/00 |
| A | US-A-4 518 054 (DELA CRUZ TORAN) <br> * Colonne 1, lignes 38-65 * | 3,4 | |
| A | GB-A-1 215 372 (BRITISH HOVERCRAFT) <br> * Figure 1 * | 5 | |
| A | FR-A-2 316 107 (BRITISH HOVERCRAFT) <br> * Figure 4; page 9, ligne 23 * | 6,7 | |
| A | FR-A-2 134 171 (PAOLI) <br> * Figure 8 * | 7 | |
| A | GB-A-2 080 223 (BRITISH HOVERCRAFT) <br> * Page 3, lignes 60-127 * | 9,10,17 ,22 | |
| A | FR-A-1 348 559 (HOLSTE) <br> * Page 1, colonne de gauche, ligne 31 - colonne de droite, ligne 3 * | 14 | DOMAINES TECHNIQUES RECHERCHES (Int. Cl.4) |
| A | GB-A-1 166 562 (HOVERMARINE) | | B 60 V |
| A | GB-A-1 490 203 (MACKLEY-ACE LTD) | | |

Le présent rapport a été établi pour toutes les revendications

| Lieu de la recherche | Date d'achèvement de la recherche | Examinateur |
|---|---|---|
| LA HAYE | 05-02-1988 | HAUGLUSTAINE H.P.M. |